# EUROPEAN PATENT APPLICATION

(11) **EP 4 564 641 A1**
(43) Date of publication of application: **04.06.2025**
(21) Application number: 23844893.0
(22) Date of filing: 10.04.2023
(51) Int. Cl.: H02J 7/00

(54) **CHARGING AND DISCHARGING CIRCUIT, CHARGING AND DISCHARGING CONTROL METHOD, AND VEHICLE**

(30) Priority: 29.07.2022 CN 202210918851
(71) Applicant: BYD Company Limited, Shenzhen, Guangdong 518118 (CN)
(72) Inventor: WANG, Junlong, Shenzhen, Guangdong 518118 (CN); XUE, Penghui, Shenzhen, Guangdong 518118 (CN); WANG, Liang, Shenzhen, Guangdong 518118 (CN); ZHENG, Leping, Shenzhen, Guangdong 518118 (CN); LUO, Qiming, Shenzhen, Guangdong 518118 (CN)
(74) Representative: Mathys & Squire
(86) International application number: PCT/CN2023/087249
(87) International publication number: WO 2024/021676

(57) **Abstract**

The present disclosure provides a charging and discharging circuit, a charging and discharging control method, and a vehicle. The charging and discharging circuit comprises a filtering processing module, a driving circuit, and a generator circuit. The generator circuit comprises a transformer module. An input end of the filtering processing module is configured to receive an input voltage, and an output end of the filtering processing module is connected to the driving circuit. The driving circuit and the generator circuit each comprise a plurality of bridge arms, and the bridge arms are connected in parallel. The transformer module is connected to all the bridge arms of the generator circuit and is connected to one of the bridge arms of the driving circuit. The charging and discharging circuit has a charging state and a discharging state. In the charging state, the driving circuit forms a power factor correction module, and the generator circuit forms a resonance module.

## Description

### CROSS-REFERENCE TO RELATED APPLICATIONS

The present disclosure claims priority to Chinese Patent Application No. 202210918851.9, filed on July 29, 2022 and entitled "CHARGING AND DISCHARGING CIRCUIT, CONTROL METHOD FOR CHARGING AND DISCHARGING, AND VEHICLE". The entire content of the above-referenced application is incorporated herein by reference.

### FIELD

The present disclosure relates to the field of vehicle charging and discharging technologies, and more specifically, to a charging and discharging circuit, a control method for charging and discharging, and a vehicle.

### BACKGROUND

An electric vehicle refers to a vehicle driven by electric energy, generally including a battery-driven vehicle, a hybrid vehicle, or a vehicle equipped with a fuel cell. Since a vehicle is completely or partially driven by a motor and equipped with a large-capacity electric energy storage apparatus, there are definitely a charging system and an electrical control system in the electric vehicle. The charging system is configured to convert an alternating current on an electricity grid side into a direct current to complete charging of a power battery. The electrical control system is configured to output direct current electric energy on a battery side as a three-phase current to power the motor to operate, thereby driving the vehicle.

Currently, the mainstream charging system and electrical control system are independent of each other. A charging system product is a vehicle-mounted charger, and an electrical control system product is an electric drive assembly. Both products require multiple electronic devices and two control chips. As a result, sustainable product supply capabilities of the products are affected, and the overall cost of the vehicle are increased.

### SUMMARY

An objective of the present disclosure is to provide a new technical solution including a charging and discharging circuit, a control method for charging and discharging, and a vehicle.

According to a first aspect of the present disclosure, a charging and discharging circuit is provided. The charging and discharging circuit includes a filtering processing module, a driving circuit, and a generator circuit. The generator circuit includes a transformer module. An input end of the filtering processing module is configured to receive an input voltage, and an output end of the filtering processing module is connected to the driving circuit. Both the driving circuit and the generator circuit include a plurality of bridge arms, and each of the plurality of bridge arms is connected in parallel. The transformer module is connected to all the bridge arms of the generator circuit and is connected to one bridge arm of the driving circuit. The charging and discharging circuit has a charging state and a discharging state. In the charging state, the driving circuit forms a power factor correction module, and the generator circuit forms a resonance module.

Optionally, the driving circuit includes a first bridge arm, a second bridge arm, and a third bridge arm. A connection point is arranged on each bridge arm, and the connection point of each bridge arm is connected to a winding. A first connection point is connected to a first output end of the filtering processing module, and the first connection point is a connection point of the first bridge arm. A second connection point is connected to a second output end of the filtering processing module, and the second connection point is a connection point of the second bridge arm. A third connection point is connected to the generator circuit, and the third connection point is a connection point of the third bridge arm.

Optionally, the generator circuit includes a fourth bridge arm, a fifth bridge arm, and a sixth bridge arm. A connection point is arranged on each bridge arm, and the connection point of each bridge arm is connected to a winding. A first input end of the transformer module is connected to a fourth connection point, and the fourth connection point is a connection point of the fourth bridge arm. A second input end of the transformer module is connected to the third connection point. A first output end of the transformer module is connected to a fifth connection point, and the fifth connection point is a connection point of the fifth bridge arm. A second output end of the transformer module is connected to a sixth connection point, and the sixth connection point is a connection point of the sixth bridge arm.

Optionally, the charging and discharging circuit includes a switch assembly. The switch assembly includes a charging switch, an operating state switch, a resonance switch, a driving switch, and an electricity generation switch. The charging switch is arranged between the output end of the filtering processing module and the driving circuit, and is configured to control the input voltage to supply electricity to the charging and discharging circuit. The operating state switch is configured to control the charging and discharging circuit to be in the charging state or the discharging state. The resonance switch is arranged in the transformer module, and is configured to control the generator circuit to form the resonance module in the charging state. The driving switch is arranged on the driving circuit, and the electricity generation switch is arranged on the electricity generation circuit. The driving switch and the electricity generation switch are configured to control the charging and discharging circuit to output a driving current in the discharging state.

Optionally, in the charging state, the power factor correction module formed by the driving circuit includes the first bridge arm and the second bridge arm. The resonance module formed by the generator circuit includes the third bridge arm, the fourth bridge arm, the transformer module, the fifth bridge arm, and the sixth bridge arm.

Optionally, the driving circuit further includes a first bus capacitor and a bleeder resistor. The first bus capacitor is connected in parallel between the second bridge arm and the third bridge arm, and two ends of the bleeder resistor are separately connected to two ends of the first bus capacitor.

Optionally, the generator circuit further includes a second bus capacitor, and two ends of the second bus capacitor are connected to two ends of the sixth bridge arm of the generator circuit.

According to a second aspect of the present disclosure, a control method for charging and discharging is further provided. The method is applied to the charging and discharging circuit according to any one of the first aspect, and the method includes: A state trigger instruction received by a controlled vehicle is obtained; the charging and discharging circuit is controlled to be in the charging state or the discharging state according to the state trigger instruction; and a bridge arm control signal is generated according to the charging state or the discharging state of the charging and discharging circuit. The bridge arm control signal is configured to control turn-on and turn-off of the plurality of bridge arms of the charging and discharging circuit when the charging and discharging circuit is in the charging state, to cause the driving circuit to form the power factor correction module, and cause the generator circuit to form the resonance module.

Optionally, that the charging and discharging circuit is controlled to be in the charging state or the discharging state according to the state trigger instruction includes: the charging switch and the resonance switch of the charging and discharging circuit are controlled to be in a turn-on state, and the operating state switch, the driving switch, and the electricity generation switch are controlled to be in a turn-off state, to cause the charging and discharging circuit to be in the charging state; and the charging switch and the resonance switch of the charging and discharging circuit are controlled to be in the turn-off state, and the operating state switch, the driving switch, and the electricity generation switch are controlled to be in the turn-on state, to cause the charging and discharging circuit to be in a driving state.

According to a third aspect of the present disclosure, a vehicle is further provided, including a power battery and the charging and discharging circuit according to any one of the first aspect. The power battery is connected to the charging and discharging circuit. When the charging and discharging circuit is in the charging state, the charging and discharging circuit is configured to charge the power battery. When the charging and discharging circuit is in the discharging state, the power battery outputs the driving current via the charging and discharging circuit.

A beneficial effect of the present disclosure is that the charging and discharging circuit in this embodiment includes the filtering processing module, the driving circuit, and the generator circuit. The generator circuit includes the transformer module. The input end of the filtering processing module is configured to receive the input voltage, and the output end of the filtering processing module is connected to the driving circuit. Both the driving circuit and the generator circuit include the plurality of bridge arms, and each of the plurality of bridge arms is connected in parallel. The transformer module is connected to all the bridge arms of the generator circuit and is connected to one bridge arm of the driving circuit. The charging and discharging circuit has the charging state and the discharging state. In the charging state, the driving circuit forms the power factor correction module, and the generator circuit forms the resonance module, which can implement integration of the existing driving circuit and the existing charging circuit. By multiplexing a power device in the driving circuit and a power device in the generator module, and by using a circuit architecture, time division multiplexing of a driving function and a charging function of the vehicle can be implemented, costs can be reduced, and device utilization can be improved.

Other features and advantages of embodiments of the present disclosure will become apparent from the following detailed description of exemplary embodiments of the present disclosure with reference to the accompanying drawings.

### BRIEF DESCRIPTION OF THE DRAWINGS

The accompanying drawings, which are incorporated into and constitute a part of this specification, show embodiments of the present disclosure, and are used together with this specification to describe the principle of the present disclosure.
FIG. 1 is a circuit diagram of a charging and discharging circuit according to an embodiment;
FIG. 2 is a schematic circuit diagram to which a charging state of a charging and discharging circuit according to an embodiment can be applied;
FIG. 3 is a schematic circuit diagram to which a driving state of a charging and discharging circuit according to an embodiment can be applied;
FIG. 4 is a schematic flowchart of a control method for charging and discharging according to another embodiment; and
FIG. 5 is a principle diagram of a vehicle according to an embodiment.

In the drawings:
101. Filtering processing module; 102. driving circuit; 103. generator circuit;
104. power factor correction module; 105. resonance module; 106. driving module;
107. electricity generation module; 108. electricity grid; 600. vehicle; 601. power battery; and
602. charging and discharging circuit.

### DETAILED DESCRIPTION

Various exemplary embodiments of the present disclosure are now described in detail with reference to the accompanying drawings. It is to be noted that, unless otherwise specified, relative arrangement, numerical expressions, and numerical values of components and steps described in the embodiments do not limit the scope of the present disclosure.

In fact, the following descriptions of at least one exemplary embodiment are merely illustrative, and in no way constitute any limitation on the present disclosure and application or use of the present disclosure.

Technologies, methods, and devices known to those of ordinary skill in related arts may not be discussed in detail, but where appropriate, the techniques, the methods, and the devices should be considered as a part of the specification.

In all examples shown and discussed herein, any specific value should be construed as merely exemplary and not as limitations. Therefore, other examples of exemplary embodiments may have different values.

It is to be noted that, similar reference numerals and letters refer to similar items in the following accompanying drawings. Therefore, once an item is defined in an accompanying drawing, the item does not need to be further discussed in the subsequent accompanying drawings.

It should be noted that all actions of obtaining signals, information, or data in the present disclosure are performed in compliance with corresponding data protection regulations and policies of a country, and with authorization granted by an owner of a corresponding apparatus.

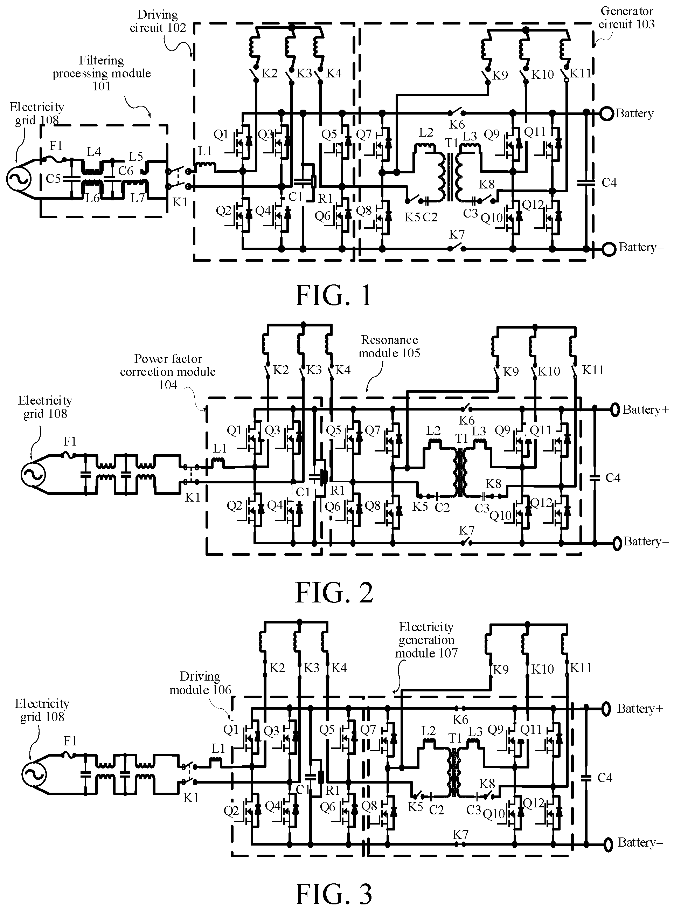

FIG. 1 is a circuit diagram of a charging and discharging circuit according to an embodiment. Referring to FIG. 1, the charging and discharging circuit includes a filtering processing module 101, a driving circuit 102, and a generator circuit 103. The generator circuit 103 includes a transformer module.

In this embodiment, an input end of the filtering processing module 101 may be connected to an electricity supply grid to receive an input voltage. An output end of the filtering processing module 101 is connected to the driving circuit 102. The filtering processing module 101 is configured to perform filtering processing on an electricity grid voltage in a charging state, and suppress electromagnetic noise and clutter.

Referring to FIG. 1, a fuse F1 is connected between the filtering processing module 101 and the electricity grid 108, to serve as a fuse on an electricity grid side of a charging system. The filtering processing module 101 includes filter capacitors C5 and C6, and isolation inductors L4, L5, L6, and L7. L4 and L5 are connected in series on a connection route between the filtering processing module 101 and the electricity grid 108. L6 and L7 are connected in series on another connection route between the filtering processing module 101 and the electricity grid 108. C5 is connected in parallel at two ends of the electricity grid 108. C6 is connected in parallel between a first end of L5 and a first end of L7. A second end of L5 is a first output end of the filtering processing module 101. A second end of L7 is a second output end of the filtering processing module 101.

In this embodiment, both the driving circuit 102 and the generator circuit 103 include a plurality of bridge arms, and each of the plurality of bridge arms is connected in parallel. During driving of a vehicle, the generator circuit 103 may implement a function of transmitting electric energy of a power battery to the driving circuit 102, and the bridge arm of the driving circuit 102 may implement a driving function.

The transformer module is arranged in the generator circuit 103 in this embodiment. The transformer module is connected to all the bridge arms of the generator circuit 103 and is connected to one bridge arm of the driving circuit 102. The charging and discharging circuit has the charging state and a discharging state. In the charging state, the driving circuit 102 forms a power factor correction module 104, and the generator circuit 103 forms a resonance module 105.

In this embodiment, a power device in the driving circuit 102 is multiplexed to form the power factor correction module 104. An alternating current is rectified into a direct current, and the transformer module and the bridge arm of the generator circuit 103 are multiplexed, to form the resonance module 105 as shown in FIG. 2, so that a power factor can be increased via a resonance circuit. In addition, when the vehicle is in a driving state, the driving circuit 102 may also implement the driving function of the vehicle. In other words, in this embodiment, integration of the driving circuit 102 and a charging circuit can be implemented. The power device is multiplexed, so that time division multiplexing of an integrated circuit at different time points is implemented, to implement two functions: charging and driving, thereby further saving circuit devices and reducing costs.

Referring to FIG. 1, the driving circuit 102 includes a first bridge arm, a second bridge arm, and a third bridge arm. A connection point is arranged on each bridge arm, and the connection point of each bridge arm is connected to a winding. A first connection point is connected to the first output end of the filtering processing module 101, and the first connection point is a connection point of the first bridge arm. A second connection point is connected to the second output end of the filtering processing module 101, and the second connection point is a connection point of the second bridge arm. A third connection point is connected to the generator circuit 103, and the third connection point is a connection point of the third bridge arm.

Referring to FIG. 1, each bridge arm includes two switch tubes, the switch tubes are MOS tubes, and the connection point of each bridge arm is a connection point of the two switch tubes. For example, the first bridge arm includes switch tubes Q1 and Q2, and the first connection point is a connection point of Q1 and Q2. The second bridge arm includes switch tubes Q3 and Q4, and the second connection point is a connection point of Q3 and Q4. The third bridge arm includes switch tubes Q5 and Q6, and the third connection point is a connection point of Q5 and Q6.

The generator circuit 103 includes a fourth bridge arm, a fifth bridge arm, and a sixth bridge arm. A connection point is arranged on each bridge arm, and the connection point of each bridge arm is connected to a winding. A first input end of the transformer module is connected to a fourth connection point, and the fourth connection point is a connection point of the fourth bridge arm. A second input end of the transformer module is connected to the third connection point. A first output end of the transformer module is connected to a fifth connection point, and the fifth connection point is a connection point of the fifth bridge arm. A second output end of the transformer module is connected to a sixth connection point, and the sixth connection point is a connection point of the sixth bridge arm.

For example, the fourth bridge arm includes switch tubes Q7 and Q8, the fifth bridge arm includes switch tubes Q9 and Q10, and the sixth bridge arm includes switch tubes Q11 and Q12. The connection point of each bridge arm is a connection point of two switch tubes. In this case, the fourth connection point is a connection point of Q7 and Q8, the fifth connection point is a connection point of Q9 and Q10, and the sixth connection point is a connection point of Q11 and Q12.

In this embodiment, one end of each winding of the driving circuit 102 is separately connected to connection points of the first bridge arm, the second bridge arm, and the third bridge arm. The other end of each winding of the driving circuit 102 is connected to each other. A winding that is correspondingly connected to each bridge arm is a three-phase winding of a driving motor, to cause the vehicle to be driven to run in a driving state.

Referring to FIG. 1, the transformer module includes an inductor L2, an inductor L3, a capacitor C2, and a capacitor C3 that play a filtering role, and a transformer T1. A first end of L2 is the first input end of the transformer module, and a second end of L2 is connected to a first end of a primary side of the transformer. A first end of C2 is connected to the second input end of the transformer module, and a second end of C2 is connected to a second end of the primary side of the transformer. A first end of a secondary side of the transformer is connected to a first end of L3, and a second end of the secondary side of the transformer is connected to a first end of C3. A second end of C3 is connected to the second output end of the transformer module.

In this embodiment, the first input end of the transformer module is connected to the fourth connection point. In other words, the first end of L2 is connected to the connection point of Q7 and Q8. The second input end of the transformer module is connected to the third connection point of the driving circuit 102. In other words, the connection point of Q5 and Q6 is connected to the first end of C2. The first output end of the transformer module is connected to the fifth connection point. In other words, the first end of L3 is connected to the connection point of Q9 and Q10. The second output end of the transformer module is connected to the sixth connection point. In other words, the second end of C3 is connected to the connection point of the switch tubes Q11 and Q12.

In this embodiment, one end of each winding of the generator circuit 103 is separately connected to connection points of the fourth bridge arm, the fifth bridge arm, and the sixth bridge arm. The other end of each winding of the generator circuit 103 is connected to each other. A winding that is correspondingly connected to each bridge arm is a three-phase winding of the generator, to cause electric energy stored in a battery to be sent to the driving motor in the driving state.

In this embodiment, the charging and discharging circuit further includes a switch assembly. The switch assembly is configured to control the charging and discharging circuit to be in the charging state or the driving state. The switch assembly includes a charging switch, an operating state switch, a resonance switch, a driving switch, and an electricity generation switch. The charging switch K1 includes a single-pole double-throw switch. The charging switch K1 is arranged between the output end of the filtering processing module 101 and the driving circuit 102, and is configured to control the input voltage to supply electricity to the charging and discharging circuit. When K1 is turned off, the input voltage is disconnected from the charging and discharging circuit, and the battery cannot be charged. When K1 is turned on, the input voltage is connected to the charging and discharging circuit, and the battery can be charged.

In this embodiment, the operating state switch is configured to control the charging and discharging circuit to be in the charging state or the discharging state. The operating state switches include K6 and K7. The charging and discharging circuit further includes a first bus and a second bus. The first bus is connected to a positive electrode of the battery, and the second bus is connected to a negative electrode of the battery. The battery in this embodiment is a power battery arranged on an electronic device, for example, a vehicle. The power battery is configured to provide electric energy for the vehicle. The operating state switch K6 is arranged on the first bus, and K7 is arranged on the second bus. Circuit connection between the battery and the driving circuit 102 and circuit connection between the battery and the generator circuit 103 can be controlled by controlling turn-on and turn-off states of K6 and K7. In a case that K6 and K7 are turned on, a voltage of the power battery is applied to two ends of each bridge arm of the driving circuit 102 and the generator circuit 103. In a case that K6 and K7 are turned off, the voltage of the power battery is applied to two ends of some bridge arms of the driving circuit 102 and the generator circuit 103, so that a flowing direction of a current of the switch tubes of some bridge arms can be changed, thereby changing a circuit state of the charging and discharging circuit.

In this embodiment, the resonance switch is arranged in the transformer module, and is configured to control the generator circuit 103 to form the resonance module 105 in the charging state. The resonance switches include K5 and K8. A first end of K5 is the second input end of the transformer module, and a second end of K5 is connected to the first end of C2. A first end of K8 is connected to the second end of C3, and a second end of K8 is the second output end of the transformer module. The resonance switches K5 and K8 are configured to control connection between the transformer module and the driving circuit 102 and connection between the transformer module and the generator circuit 103. In this way, the charging and discharging circuit can convert, in the charging state by using the transformer module, a voltage of the electricity grid 108 into a voltage value adapted to the battery.

In this embodiment, the driving switch is arranged on the driving circuit 102, and the electricity generation switch is arranged on the electricity generation circuit. The driving switch and the electricity generation switch are configured to control the charging and discharging circuit to output a driving current in the discharging state. The driving switches include K2, K3, and K4. The driving switch K2 is arranged between the first bridge arm and a corresponding winding of the first bridge arm. K3 is arranged between the second bridge arm and a corresponding winding of the second bridge arm. K4 is arranged between the third bridge arm and a corresponding winding of the third bridge arm. K2, K3, and K4 are contactors that are connected to three-phase lines of the driving motor.

In this embodiment, the electricity generation switches include K9, K10, and K11. K9 is arranged between the connection point of the fourth bridge arm and a corresponding winding of the fourth bridge arm. K10 is arranged between the connection point of the fifth bridge arm and a corresponding winding of the fifth bridge arm. K11 is arranged between the connection point of the sixth bridge arm and a corresponding winding of the sixth bridge arm. K9, K10, and K11 are contactors that are connected to three-phase lines of the generator.

In this embodiment, in the charging state, the power factor correction module 104 formed by the driving circuit 102 includes the first bridge arm and the second bridge arm, and the resonance module 105 formed by the generator circuit 103 includes the third bridge arm, the fourth bridge arm, the transformer module, the fifth bridge arm, and the sixth bridge arm.

In an example, a control signal may be input by a controller or a manager, to control the plurality of bridge arms of the driving circuit 102 to form the power factor correction module 104 and control the generator circuit 103 to form the resonance module 105 when the charging and discharging circuit is controlled to be in the charging state, and control the driving circuit 102 and the generator circuit 103 to separately implement the driving function and a current output function when the charging and discharging circuit is controlled to be in the discharging state.

When the charging and discharging circuit is controlled by the controller, the charging and discharging circuit can be controlled by using a notification chip of a controller. Compared with a dual-chip solution of the charging system and an electrical control system, circuit costs can be reduced in this embodiment.

In this embodiment, the driving circuit 102 further includes a first bus capacitor C1 and a bleeder resistor R1. The first bus capacitor is connected in parallel between the second bridge arm and the third bridge arm, and two ends of the bleeder resistor R1 are separately connected to two ends of the first bus capacitor C1. The first bus capacitor C1, the second bridge arm of the driving circuit 102, and the third bridge arm of the driving circuit 102 are connected in parallel in sequence.

Referring to FIG. 1, a first end of C1 is connected to the first bus, and a connection point of C1 and the first bus is located between a connection point of the second bridge arm and the first bus and a connection point of the third bridge arm and the first bus. A second end of C1 is connected to the second bus, and a connection point of C1 and the second bus is located between a connection point of the second bridge arm and the second bus and a connection point of the third bridge arm and the second bus. The bleeder resistor R1 is configured to drain a voltage stored on C1 after the circuit is powered off, to protect the circuit.

In this embodiment, the generator circuit 103 further includes a second bus capacitor C4, and two ends of the second bus capacitor C4 are connected to two ends of the sixth bridge arm of the generator circuit 103. A first end of C4 is connected to the first bus, and a second end of C4 is connected to the second bus. The first end of C4 is connected to a connection point of the sixth bridge arm and the first bus, and the second end of C4 is connected to a connection point of the sixth bridge arm and the second bus.

In this embodiment, the power factor correction module 104 includes the first bridge arm, the second bridge arm, and a power inductor L1. The power inductor L1 is arranged between the charging switch K1 and a midpoint of the first bridge arm. Referring to FIG. 2, the power inductor L1, the switch tubes Q1 and Q2 of the first bridge arm, and switch tubes Q3 and Q4 of the second bridge arm form the power factor correction module 104, that is, a PFC full-bridge rectification circuit. In this case, C1 is an output capacitor that is configured to output a voltage whose power factor is corrected.

Referring to FIG. 2, in this embodiment, the resonance module 105 includes the third bridge arm, the fourth bridge arm, the transformer module, the fifth bridge arm, and the sixth bridge arm. The resonance module 105 has a symmetrical structure. It can be learned from FIG. 2 that a resonance circuit formed by Q5, Q6, Q7, Q8, L2, K5, and C2 is symmetrical to a resonance circuit formed by L3, C3, K8, Q9, Q10, Q11, and Q12.

Referring to FIG. 2, when K1, K5, and K8 are turned on, and K2, K3, K4, K6, K7, K9, K10, and K11 are turned off, the charging and discharging circuit is in the charging state. A power factor correction function is implemented by controlling turn-on and turn-off of the switch tubes Q1 to Q4. A resonance circuit function is implemented by controlling turn-on and turn-off of the switch tubes Q5 to Q12. Energy passes through the filtering processing module 101 from an electricity grid 108 side, passes through K1, and enters the power factor correction module 104, through which the alternating current is rectified into the direct current. The energy then passes through the output capacitor C1 and enters the resonance module 105 that increases the power factor via the resonance circuit, and passes through the bus capacitor C4 and enters the battery to complete charging. In this case, a total of 12 control signals for Q1 to Q12 may be sent by an MCU in the controller. Q1 to Q4 are PFC control signals, and Q5 to Q12 are LLC control signals. The PFC control signals are variable duty cycle PWM signals, and the LLC control signals are variable frequency PWM signals.

Referring to FIG. 3, when K1, K5, and K8 are turned off, and K2, K3, K4, K6, K7, K9, K10, and K11 are turned on, the charging and discharging circuit is in the driving state. An output function of the driving motor is implemented by controlling turn-on and turn-off of the switch tubes Q1 to Q6, and an output function of the generator is implemented by controlling turn-on and turn-off of the switch tubes Q7 to Q12. The energy flows from the battery through the bus to an inverter circuit of a driving module 106 and an inverter circuit of an electricity generation module 107, to invert the direct current of the battery into the alternating current and output the alternating current to the motor to implement a driving function of the vehicle. In this case, a total of 12 control signals for Q1 to Q12 may be sent by an MCU in the controller. Q1 and Q2 are PWM signals for the first bridge arm. Q3 and Q4 are PWM signals for the second bridge arm. Q5 and Q6 are PWM signals for the third bridge arm. Q7 and Q8 are PWM signals for the fourth bridge arm. Q9 and Q10 are PWM signals for the fifth bridge arm. Q11 and Q12 are PWM signals for the sixth bridge arm.

The charging and discharging circuit in this embodiment includes the filtering processing module 101, the driving circuit 102, and the generator circuit 103. The generator circuit 103 includes the transformer module. The input end of the filtering processing module 101 is configured to receive the input voltage, and the output end of the filtering processing module 101 is connected to the driving circuit 102. Both the driving circuit 102 and the generator circuit 103 include the plurality of bridge arms, and each of the plurality of bridge arms is connected in parallel. The transformer module is connected to all the bridge arms of the generator circuit 103 and is connected to one bridge arm of the driving circuit 102. The charging and discharging circuit has the charging state and the discharging state. In the charging state, the driving circuit 102 forms the power factor correction module 104, and the generator circuit 103 forms the resonance module 105, which can implement integration of the existing driving circuit 102 and the existing charging circuit. The power device in the driving circuit 102 and a power device in the generator module are multiplexed, and a circuit architecture is used, so that time division multiplexing of the driving function and the charging function of the vehicle can be implemented, costs can be reduced, and device utilization can be improved.

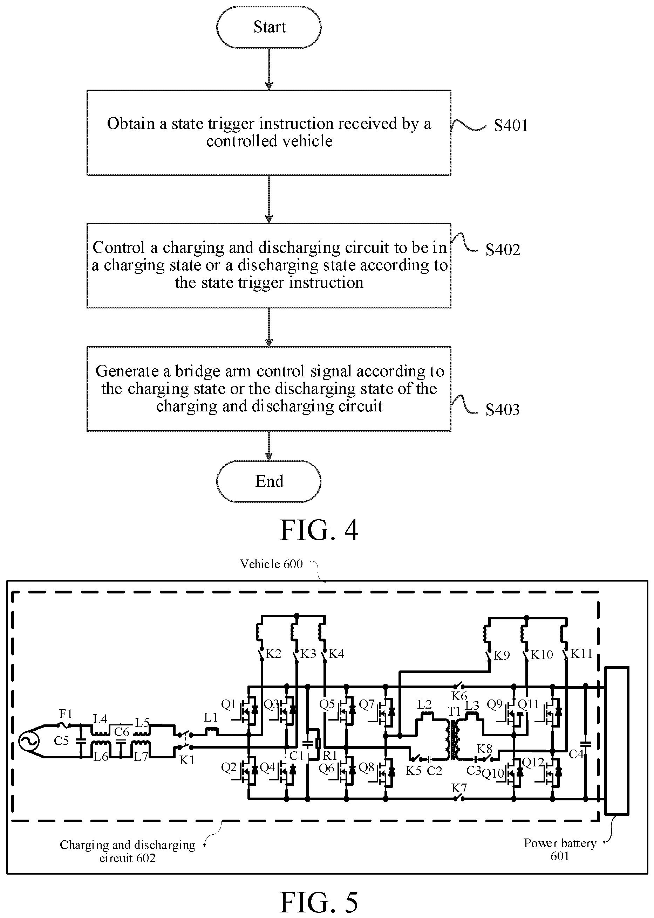

Referring to FIG. 4, this embodiment provides a flowchart of a control method for charging and discharging. The method is applied to the charging and discharging circuit in the foregoing embodiment. The method includes the following step S401 to step S403.

S401: A state trigger instruction received by a controlled vehicle is obtained.

In this embodiment, the controlled vehicle may be the vehicle in which the charging and discharging circuit shown in FIG. 1 is arranged. A driving button or a vehicle state switching button is arranged on the controlled vehicle. The state trigger instruction received by the controlled vehicle may be trigger of the driving button or the vehicle state switching button by a user. For example, after the user presses the driving button, the state trigger instruction received by the controlled vehicle is that the vehicle is in a driving state. The state trigger instruction received by the controlled vehicle may alternatively be sensor data of the vehicle. For example, when a sensor of the vehicle detects that a charging connector is inserted into a charging port, the state trigger instruction received by the controlled vehicle is that the vehicle is in a charging state.

S402: The charging and discharging circuit is controlled to be in a charging state or a discharging state according to the state trigger instruction.

In this embodiment, that the charging and discharging circuit is controlled to be in the charging state or the discharging state includes: A charging switch and a resonance switch of the charging and discharging circuit are controlled to be in a turn-on state, and an operating state switch, a driving switch, and an electricity generation switch are controlled to be in an turn-off state, to cause the charging and discharging circuit to be in the charging state; and the charging switch and the resonance switch of the charging and discharging circuit are controlled to be in the turn-off state, and the operating state switch, the driving switch, and the electricity generation switch are controlled to be in the turn-on state, to cause the charging and discharging circuit to be in the driving state.

Referring to FIG. 2, when K1, K5, and K8 are controlled to be turned on, and K2, K3, K4, K6, K7, K9, K10, and K11 are controlled to be turned off, the charging and discharging circuit is in the charging state. The controller controls the turn-on and the turn-off of the switch tubes Q1 to Q4 to implement the power factor correction function, and controls the turn-on and the turn-off of the switch tubes Q5 to Q12 to implement the resonance circuit function. Energy passes through the filtering processing module 101 from the electricity grid 108 side, passes through K1, and enters the power factor correction module 104, through which the alternating current is rectified into the direct current. The energy then passes through the output capacitor C1 and enters the resonance module 105 that increases the power factor via the resonance circuit, and passes through the bus capacitor C4 and enters the battery to complete charging.

Referring to FIG. 3, when K1, K5, and K8 are controlled to be turned off, and K2, K3, K4, K6, K7, K9, K10, and K11 are controlled to be turned on, the charging and discharging circuit is in the driving state. The controller controls the turn-on and the turn-off of the switch tubes Q1 to Q6 to implement the output function of the driving motor, and controls the turn-on and the turn-off of the switch tubes Q7 to Q12 to implement the output function of the generator. The energy flows from the battery through the bus to the inverter circuit of the driving module 106 and the inverter circuit of the electricity generation module 107, to invert the direct current of the battery into the alternating current and output the alternating current to the motor to implement the driving function of the vehicle.

S403: A bridge arm control signal is generated according to the charging state or the discharging state of the charging and discharging circuit.

In this embodiment, the bridge arm control signal is configured to control turn-on and turn-off of the plurality of bridge arms of the charging and discharging circuit when the charging and discharging circuit is in the charging state, to cause the driving circuit 102 to form the power factor correction module 104, and cause the generator circuit 103 to form the resonance module 105.

Referring to FIG. 2, when K1, K5, and K8 are controlled to be turned on, and K2, K3, K4, K6, K7, K9, K10, and K11 are controlled to be turned off, the charging and discharging circuit is in the charging state. In this case, a total of 12 control signals for Q1 to Q12 are sent by an MCU in the controller. Q1 to Q4 are PFC control signals, and Q5 to Q12 are LLC control signals. The PFC control signals are variable duty cycle PWM signals, and the LLC control signals are variable frequency PWM signals.

Referring to FIG. 3, when K1, K5, and K8 are controlled to be turned off, and K2, K3, K4, K6, K7, K9, K10, and K11 are controlled to be turned on, the charging and discharging circuit is in the driving state. In this case, a total of 12 control signals for Q1 to Q12 are sent by an MCU in the controller. Q1 and Q2 are the PWM signals for the first bridge arm. Q3 and Q4 are the PWM signals for the second bridge arm. Q5 and Q6 are the PWM signals for the third bridge arm. Q7 and Q8 are the PWM signals for the fourth bridge arm. Q9 and Q10 are the PWM signals for the fifth bridge arm. Q11 and Q12 are the PWM signals for the sixth bridge arm.

The charging and discharging circuit in this embodiment includes the filtering processing module 101, the driving circuit 102, and the generator circuit 103. The generator circuit 103 includes the transformer module. The input end of the filtering processing module 101 is configured to receive the input voltage, and the output end of the filtering processing module 101 is connected to the driving circuit 102. Both the driving circuit 102 and the generator circuit 103 include the plurality of bridge arms, and each of the plurality of bridge arms is connected in parallel. The transformer module is connected to all the bridge arms of the generator circuit 103 and is connected to one bridge arm of the driving circuit 102. The charging and discharging circuit has the charging state and the discharging state. In the charging state, the driving circuit 102 forms the power factor correction module 104, and the generator circuit 103 forms the resonance module 105, which can implement the integration of the existing driving circuit 102 and the existing charging circuit. The power device in the driving circuit 102 and the power device are multiplexed in the generator module, and a circuit architecture is used, so that the time division multiplexing of the driving function and the charging function of the vehicle can be implemented, the costs can be reduced, and the device utilization can be improved.

This embodiment provides a vehicle. Referring to FIG. 5, a vehicle 600 includes a power battery 601 and a charging and discharging circuit 602. The charging and discharging circuit is the charging and discharging circuit shown in FIG. 1. The power battery 601 is connected to the charging and discharging circuit. When the charging and discharging circuit is in a charging state, the charging and discharging circuit is configured to charge the power battery. When the charging and discharging circuit is in a discharging state, the power battery 601 outputs a driving current via the charging and discharging circuit. Specifically, the functions of the modules are described in the foregoing embodiments, and details are not described herein again.

The present disclosure may be a system, a method, and/or a computer program product. The computer program product may include a computer-readable storage medium having computer-readable program instructions loaded thereon for enabling a processor to implement various aspects of the present disclosure.

The computer-readable storage medium may be a physical device that can retain and store instructions used by an instruction-executing device. The computer-readable storage medium may be, for example, but is not limited to, an electrical storage device, a magnetic storage device, an optical storage device, an electromagnetic storage device, a semiconductor device, or any appropriate combination thereof. More specific examples of the computer-readable storage medium (a non-exhaustive list) include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoding device, for example, a punched card or a bump structure in a groove having instructions stored thereon, and any appropriate combination thereof. The computer-readable storage medium used herein is not to be construed as a transient signal, for example, a radio wave, another electromagnetic wave that is freely propagated, an electromagnetic wave (for example, an optical pulse passing through a fiber optic cable) that is propagated through a waveguide or another transmission medium, or an electrical signal transmitted through a wire.

The computer-readable program instructions described herein may be downloaded into computing/processing devices from the computer-readable storage medium or into an external computer or an external storage device through a network, for example, the internet, a local area network, a wide area network, and/or a wireless network. The network may include a copper transmission cable, optical fiber transmission, wireless transmission, a router, a firewall, a switch, a gateway computer, and/or an edge server. A network adapter card or network interface in each computing/processing device receives the computer-readable program instructions from the network and forwards the computer-readable program instructions for storage in the computer-readable storage medium in each computing/processing device.

Computer program instructions for performing the operations of the present disclosure may be assembly instructions, instruction set architecture (ISA) instructions, machine instructions, machine-related instructions, microcode, firmware instructions, state-setting data, or source code or object code written in any combination of one or more programming languages. The programming languages include an object-oriented programming language such as Smalltalk or C++, and a conventional procedural programming language such as "C" language or a similar programming language. The computer-readable program instructions may be completely executed on a user computer, partially executed on a user computer, executed as an independent software package, partially executed on a user computer and partially executed on a remote computer, or completely executed on a remote computer or server. For the case involving a remote computer, the remote computer may be connected to a user computer through any type of network including a local area network (LAN) or a wide area network (WAN), or may be connected to an external computer (for example, through the internet by using an internet service provider). In some embodiments, an electronic circuit such as a programmable logic circuit, a field programmable gate array (FPGA), or a programmable logic array (PLA) is customized by using state information of the computer-readable program instructions. The electronic circuit may execute the computer-readable program instructions, to implement various aspects of the present disclosure.

Various aspects of the present disclosure are described with reference to the flowcharts and/or block diagrams of the method, the apparatus (the system), and the computer program products according to the embodiments of the present disclosure. It should be understood that each block in the flowcharts and/or block diagrams and combinations of blocks in the flowcharts and/or block diagrams may be implemented by the computer program instructions.

These computer-readable program instructions may be provided for a general-purpose computer, a special-purpose computer, or a processor of another programmable data processing apparatus to produce a machine, so that when these instructions are executed by the computer or the processor of another programmable data processing apparatus, an apparatus for implementing the functions/actions specified in one or more blocks in the flowcharts and/or block diagrams is generated. Alternatively, the computer-readable program instructions may be stored in the computer-readable storage medium, and the instructions enable the computer, the programmable data processing apparatus, and/or another device to operate in a specific manner. Therefore, the computer-readable medium storing the instructions includes an artifact that includes instructions for implementing various aspects of the functions/actions specified in one or more blocks in the flowcharts and/or block diagrams.

The computer program instructions may also be loaded into the computer, another programmable data processing apparatus, or another device, so that a series of operations and steps are performed on the computer, another programmable data processing apparatus, or another device to generate computer-implemented processing. Therefore, the instructions executed on the computer, another programmable data processing apparatus, or another device implement the functions/actions specified in one or more blocks in the flowcharts and/or block diagrams.

The flowcharts and block diagrams in the accompanying drawings illustrate system architectures, functions, and operations of possible implementations of systems, methods, and computer program products according to various embodiments of the present disclosure. In this regard, each block in the flowcharts or block diagrams may represent a module, a program segment, or a part of instructions. The module, the program segment, or the part of instructions includes one or more executable instructions used for implementing designated logic functions. In some implementations used as substitutes, functions annotated in the blocks may alternatively occur in a sequence different from that annotated in the accompanying drawings. For example, two blocks shown in succession may, in fact, be performed basically in parallel, and sometimes the two blocks may be performed in a reverse sequence. This is determined by a related function. It should also be noted that, each block in the block diagrams and/or flowcharts and combinations of blocks in the block diagrams and/or flowcharts may be implemented by using a dedicated hardware-based system configured to perform a specified function or action, or may be implemented by using a combination of dedicated hardware and computer instructions. It is known to a person skilled in the art that implementation by hardware, implementation by software, and implementation by combining software and hardware are equivalent.

The embodiments of the present disclosure have been described above. The foregoing description is exemplary and nonexhaustive, and is not limited to the disclosed embodiments. Without departing from the scope and spirit of the described embodiments, many modifications and changes are apparent to a person of ordinary skill in the art. The terms used in this specification are selected to best explain principles or practical applications of the embodiments, or technical improvements of the embodiments in the market, or to enable another person of ordinary skill in the art to understand the embodiments disclosed in this specification. The scope of the present disclosure is limited by the appended claims.

## Claims

1. A charging and discharging circuit, comprising: a filtering processing module (101), a driving circuit (102), and a generator circuit (103), the generator circuit (103) comprising a transformer module;
an input end of the filtering processing module (101) being configured to receive an input voltage, and an output end of the filtering processing module (101) being connected to the driving circuit (102);
both the driving circuit (102) and the generator circuit (103) comprising a plurality of bridge arms, each of the plurality of bridge arms being connected in parallel, and the transformer module being connected to all the bridge arms of the generator circuit (103) and being connected to one bridge arm of the driving circuit (102); and
the charging and discharging circuit having a charging state and a discharging state, and in the charging state, the driving circuit (102) forming a power factor correction module (104), and the generator circuit (103) forming a resonance module (105).

2. The charging and discharging circuit according to claim 1, wherein the driving circuit (102) comprises a first bridge arm, a second bridge arm, and a third bridge arm, a connection point is arranged on each bridge arm, and the connection point of each bridge arm is connected to a winding,
wherein a first connection point is connected to a first output end of the filtering processing module (101), and the first connection point is a connection point of the first bridge arm;
a second connection point is connected to a second output end of the filtering processing module (101), and the second connection point is a connection point of the second bridge arm; and
a third connection point is connected to the generator circuit, and the third connection point is a connection point of the third bridge arm.

3. The charging and discharging circuit according to claim 2, wherein the generator circuit (103) comprises a fourth bridge arm, a fifth bridge arm, and a sixth bridge arm, a connection point is arranged on each bridge arm, and the connection point of each bridge arm is connected to a winding;
a first input end of the transformer module is connected to a fourth connection point, and the fourth connection point is a connection point of the fourth bridge arm;
a second input end of the transformer module is connected to the third connection point;
a first output end of the transformer module is connected to a fifth connection point, and the fifth connection point is a connection point of the fifth bridge arm; and
a second output end of the transformer module is connected to a sixth connection point, and the sixth connection point is a connection point of the sixth bridge arm.

4. The charging and discharging circuit according to claim 1, 2, or 3, comprising a switch assembly, the switch assembly comprising a charging switch, an operating state switch, a resonance switch, a driving switch, and an electricity generation switch,
the charging switch being arranged between the output end of the filtering processing module (101) and the driving circuit, and being configured to control the input voltage to supply electricity to the charging and discharging circuit;
the operating state switch being configured to control the charging and discharging circuit to be in the charging state or the discharging state;
the resonance switch being arranged in the transformer module, and being configured to control the generator circuit to form the resonance module (105) in the charging state; and
the driving switch being arranged on the driving circuit, the electricity generation switch being arranged on the electricity generation circuit, and the driving switch and the electricity generation switch being configured to control the charging and discharging circuit to output a driving current in the discharging state.

5. The charging and discharging circuit according to claim 3,
wherein in the charging state, the power factor correction module (104) formed by the driving circuit (102) comprises the first bridge arm and the second bridge arm; and
the resonance module (105) formed by the generator circuit (103) comprises the third bridge arm, the fourth bridge arm, the transformer module, the fifth bridge arm, and the sixth bridge arm.

6. The charging and discharging circuit according to claim 2, wherein the driving circuit (102) further comprises a first bus capacitor and a bleeder resistor,
wherein the first bus capacitor is connected in parallel between the second bridge arm and the third bridge arm, and two ends of the bleeder resistor are separately connected to two ends of the first bus capacitor.

7. The charging and discharging circuit according to claim 3, wherein the generator circuit (103) further comprises a second bus capacitor, and two ends of the second bus capacitor are connected to two ends of the sixth bridge arm of the generator circuit.

8. A control method for charging and discharging, the method being applied to the charging and discharging circuit according to any one of claims 1 to 7, and the method comprising:
obtaining a state trigger instruction received by a controlled vehicle;
controlling the charging and discharging circuit to be in a charging state or a discharging state according to the state trigger instruction; and
generating a bridge arm control signal according to the charging state or the discharging state of the charging and discharging circuit, the bridge arm control signal being configured to control turn-on and turn-off of a plurality of bridge arms of the charging and discharging circuit when the charging and discharging circuit is in the charging state, to cause a driving circuit to form a power factor correction module (104), and cause a generator circuit to form a resonance module (105).

9. The control method for charging and discharging according to claim 8, wherein controlling the charging and discharging circuit to be in the charging state or the discharging state according to the state trigger instruction comprises:
controlling a charging switch and a resonance switch of the charging and discharging circuit to be in a turn-on state, and controlling an operating state switch, a driving switch, an electricity generation switch to be in a turn-off state, to cause the charging and discharging circuit to be in the charging state; and
controlling the charging switch and the resonance switch of the charging and discharging circuit to be in the turn-off state, and controlling the operating state switch, the driving switch, and the electricity generation switch to be in the turn-on state, to cause the charging and discharging circuit to be in a driving state.

10. A vehicle, comprising a power battery (601) and the charging and discharging circuit (602) according to any one of claims 1 to 7, the power battery (601) being connected to the charging and discharging circuit (602), when the charging and discharging circuit (602) is in a charging state, the charging and discharging circuit (602) being configured to charge the power battery (601), and when the charging and discharging circuit (602) is in a discharging state, the power battery (601) outputting a driving current via the charging and discharging circuit (602).
